# EUROPÄISCHE PATENTSCHRIFT

(11) **EP 1 176 218 B1**
(45) Veröffentlichungstag und Bekanntmachung des Hinweises auf die Patenterteilung: **14.03.2007**
(21) Anmeldenummer: 01115267.5
(22) Anmeldetag: 23.06.2001
(51) Int. Cl.: C21D 9/50, B23K 26/24

(54) **Verfahren zur Schweissnahtglättung beim Strahlschweissen**
Process for smoothing energy beam welded weld beads
Procédé pour lisser les cordons de soudure obtenus par soudage à rayons d'énergie

(30) Priorität: 27.07.2000 DE 10037104
(43) Veröffentlichungstag der Anmeldung: 30.01.2002
(73) Patentinhaber: Hydro Aluminium Deutschland GmbH, 51149 Köln (DE)
(72) Erfinder: Maier, Christof, Dr., 50733 Köln (DE); Steimmel, Franz, 53619 Rheinbreitbach (DE)
(74) Vertreter: Cohausz & Florack

(56) Entgegenhaltungen:
- EP-A- 0 594 210
- EP-A- 1 057 577
- DE-A- 2 346 872
- DE-A- 4 328 516
- US-A- 2 756 311
- US-A- 3 437 787
- PATENT ABSTRACTS OF JAPAN vol. 005, no. 053 (M-063), 14. April 1981 (1981-04-14) & JP 56 009088 A (HITACHI LTD), 29. Januar 1981 (1981-01-29)

## Beschreibung

Die Erfindung betrifft ein Verfahren zur Schweißnahtglättung beim Strahlschweißen bei welchem eine Schweißnaht zwischen zwei Metallbauteilen zumindest mit Hilfe eines Schweißstrahls im Tiefschweißmodus hergestellt wird.

Das Strahlschweißen gewinnt in zunehmendem Maße höhere Bedeutung bei der Verbindung von Metallbauteilen über eine Schweißnaht. Unter Strahlschweißverfahren versteht man im wesentlichen das Laserstrahlschweißen und das Elektronenstrahlschweißen, wobei dem Laserstrahlschweißen eine wirtschaftlich größere Bedeutung zukommt. Im weiteren wird in der Regel vom Laserstrahlschweißen die Rede sein, was jedoch nicht als Einschränkung der erfindungsgemäßen Lehre zu verstehen ist.

Beim Laserstrahlschweißen ebenso wie beim Elektronenstrahlschweißen ermöglicht die konzentrierte Energie des Strahls einen sogenannten Tiefschweißeffekt, durch den sich die Prozeßwärme gleichförmig über die gesamte Fügetiefe verteilt. Hieraus resultiert zum einen eine geringe Wärmebelastung des Bauteils. Außerdem läßt sich beim Laserstrahlschweißen eine hohe Prozeßgeschwindigkeit für die Herstellung von Schweißnähten herstellen, was für den wirtschaftlichen Einsatz von Hochleistungslasern ausschlaggebend ist. Es ist weiter bekannt, z.B. das Laserstrahlschweißen mit dem Lichtbogenschweißen zu kombinieren (vgl. Christof Maier, "Laserstrahl-Lichtbogen-Hybridschweißen von Aluminiumwerkstoffen", Shaker Verlag, Aachen, 1999). Man spricht dann von sogenannten Hybridschweißverfahren. Weiter ist es bekannt, mit zwei neben oder hintereinander angeordneten Laserstrahlen im Tiefschweißmode von einer Seite (Doppelstrahlschweißen) oder von beiden Seiten (Simultanschweißen) zu arbeiten. Hierdurch wird die Prozeßstabilität verbessert und eine Porenreduktion gewährleistet. Auch die Fortbildung dieser und anderer Strahlschweißverfahren ist Gegenstand der vorliegenden Erfindung.

Die beim Strahlschweißen erzielbaren hohen Prozeßgeschwindigkeiten führen dazu, daß sich die Strahlschweißverfahren insbesondere zur Herstellung von großen Schweißnahtlängen eignen. Derartige große Schweißnahtlängen treten beispielsweise bei der Herstellung von sogenannten "Tailored Blanks" auf. Unter "Tailored Blanks" versteht man ebene Metallbauteile, beispielsweise Bleche, die aus verschiedenartigen, insbesondere verschieden dicken Teilen bestehen. Häufig werden diese "Tailored Blanks" dadurch hergestellt, daß die verschiedenen Teile im Stumpfstoß bzw. I-Stoß als Stumpfnaht verschweißt werden. Zur Herstellung dieser Schweißverbindung eignen sich aus den bereits genannten Gründen die Strahlschweißverfahren.

Ein weiterer Anwendungsbereich für die Strahlschweißverfahren sind die im Automobilbau zunehmend erforderlichen langen Schweißnähte zur Verbindung von stranggepreßten Hohlprofilen aus Aluminiumwerkstoffen mit anderen Karosserieteilen.

Beim Laserstrahlschweißen unterscheidet man unterschiedliche physikalische Phänomene beim Auftreffen des Laserstrahls auf den metallischen Werkstoff. Abhängig von der Strahlintensität unterscheidet man bei der Wechselwirkung zwischen Laserstrahl und Metallwerkstoff zwischen dem Wärmeleitungsmode bei eher niedrigen Laserstrahlintensitäten, dem Tiefschweißmode bei mittleren Laserstrahlintensitäten und der Plasmaabschirmung bei hohen Laserstrahlintensitäten. Beim Wärmeleitungsmode wird das Metall von der Oberfläche her aufgeschmolzen, im wesentlichen ohne daß der Laserstrahl in das Material eindringt. Im Tiefschweißmode, der zur Herstellung von Schweißnähten zwischen Metallbauteilen eingesetzt wird, nimmt die Verdampfung an der Metalloberfläche soweit zu, daß sich in dem Werkstück eine Dampfkapillare ausbildet. Durch die Dampfkapillare gelangt der Laserstrahl in das Werkstück und die Wärmeeinkopplung wird über die gesamte Fügezone verteilt. Man spricht hier auch von der sogenannten "Keyhole"-Bildung. Relativbewegungen des Laserstrahls zum Werkstück sorgt für ein Fortschreiten der Kapillare durch die Metallbauteile. Dabei schmilzt an der Schmelzfront kontinuierlich Material auf, das um die Kapillare herumgetrieben wird und an der Schmelzrückwand unter Bildung einer schmalen Naht erstarrt. Bei der Herstellung von Schweißnähten im Stumpfstoß ist es wichtig den Schweißprozeß so zu steuern, daß die Kapillare sich gerade bis zur Unterseite der Metallbauteile erstreckt, so daß ein Verschweißen über den gesamten Querschnitt gewährleistet ist.

Bei der Plasmaabschirmung ist die Laserstrahlintensität so hoch, daß der Laserstrahl in einem abschirmenden Plasma an der Metalloberfläche absorbiert wird und nur noch geringfügig in die Oberfläche des Werkstoffes eindringen kann.

In der Praxis hat sich gezeigt, daß die Schweißnahtqualität im Tiefschweißmode verbesserungswürdig ist. Sowohl an der Schweißnahtoberraupe als auch an der Schweißnahtwurzel treten unerwünschte Effekte auf. Insbesondere beim Verschweißen von Metallbauteilen aus Aluminiumwerkstoffen treten an der Schweißnahtwurzel unerwünschte Materialspitzen oder Kerben auf. Diese im wesentlichen im Bereich der Oberflächen der Schweißnahtraupe vorhandenen Effekte sind zum einen häufig optisch unerwünscht, befördern bei dynamischer Belastung die Rißbildung und führen bei den "Tailored Blanks" zu eingeschränkter Weiterverarbeitbarkeit.

Fast alle bekannten Vorschläge zur Verbesserung der Qualität der Schweißnaht konzentrieren sich auf die Prozeßzone (Ort, wo durch einen Energiestrahl die Schweißenergie in das Werkstück eingebracht wird), sei es, daß beim Hybridschweißen die günstige Wechselwirkung zwischen dem Laserstrahl und dem Lichtbogen bei größerer Tiefenwirkung des Laserstrahls und günstigerem elektrischen Wirkungsgrad des Lichtbogens genutzt werden, sei es, daß mit einem Laserstrahl von einer Bauteilseite der stumpfe Stoß bearbeitet wird und von der anderen Seite mit einem Lichtbogen zusätzliche Wärmeenergie in der Prozeßzone zugeführt wird. Alle diese Maßnahmen haben aber nicht zu befriedigenden Ergebnissen hinsichtlich einer möglichst langen wartungsfreien Standzeit der Schweißeinrichtung (hohe Produktivität) und/oder einer glatten Oberfläche der Schweißnaht geführt.

Ausgehend von dem zuvor beschriebenen Stand der Technik liegt der vorliegenden Erfindung die Aufgabe zugrunde, die Oberflächenqualität der Schweißnaht bei möglichst hoher Produktivität zu verbessern.

Die zuvor hergeleitete und aufgezeigte Aufgabe wird erfindungsgemäß dadurch gelöst, daß der Schweißnaht an einem zur Prozeßzone des Schweißstrahls räumlich versetzten Ort weitere Wärme mittels eines Lichtbogens in einem solchen Maße zugeführt wird, daß die Schweißnaht an diesem Ort durch erneutes Aufschmelzen zumindest an der Oberfläche oder Erhöhung des Flüssigkeitsgrades einer bestehenden Schmelze geglättet wird.

Bei dem erfindungsgemäßen Verfahren wird im Unterschied zu bekannten Schweißverfahren, insbesondere zum Hybridschweißen, mit voneinander "entkoppelten" Bearbeitungszonen gearbeitet. Dabei bewirkt das erneute Aufschmelzen der zumindest teilweise bereits erstarrten Schweißnahtoberfläche oder die Erhöhung der Temperatur der noch nicht erstarrten Schmelze eine Verflüssigung an der Oberfläche der Schweißnaht und damit eine Glättung dieser Oberfläche.

Das erneute Aufschmelzen läßt sich online mit dem Strahlschweißen durchführen. Das hat den Vorteil, daß wegen der Ausnutzung der Schweißwärme weniger Wärmeenergie für das erneute Aufschmelzen oder die weitere Verflüssigung der Schmelze benötigt wird und der Durchlauf schnell ist. Es läßt sich allerdings auch Off-Line durchführen, d.h. nach Erstellung der Schweißnaht erfolgt eine Glättung in einem separaten Arbeitsschritt.

Die für das erneute Aufschmelzen/die weitere Verflüssigung benötigte Wärme kann von der Oberseite der Schweißnaht zugeführt. Sie wird bei Aluminiumblechen vorzugsweise allerdings von der Unterseite unterstützend oder sogar ausschließlich zugeführt, weil dadurch auch die Qualität der Nahtwurzel verbessert und die sich vor allem an der Rückseite bildenden Spitzen in der Schweißnaht geglättet werden können. Unter der Oberseite der Schweißnaht ist dabei die der Schmelzstrahlquelle zugewandte Seite zu verstehen. Eine Glättung der Schweißnaht erfolgt jeweils auf der Seite, von der aus die Oberfläche aufgeschmolzen oder weiter verflüssigt wird.

Eine erste Ausgestaltung sieht vor, daß die beiden Elektroden für den Lichtbogen auf der Ober- und Unterseite der Schweißnaht angeordnet ist, wobei das Bauteil auf einem Spannungspotential zwischen den Spannungspotentialen der Elektroden liegt. Bei dieser Ausgestaltung fließt der Strom von der einen Elektrode über einen ersten Lichtbogen zum Bauteil und vom Bauteil über einen zweiten Lichtbogen zur anderen Elektrode. Ist kein Werkstück vorhanden, brennt nur ein Lichtbogen zwischen den Elektroden. Der Vorteil dieser Anordnung ist, daß der Lichtbogen am Anfang der Bauteilbearbeitung nicht, wie sonst üblich, durch Hochspannungsimpulse gezündet werden muß. Dies vermeidet eine elektromagnetische Störstrahlung und minimiert oder eliminiert sogar eine sonst unvermeidliche Anlaufstrecke bei der Bearbeitung.

Auf die Zufuhr der für das erneute Aufschmelzen oder die weitere Verflüssigung der Schmelze benötigten Wärme mittels Lichtbogen kann auf verschiedene Art und Weise Einfluß genommen werden. Die negativ gepolte Elektrode sollte auf der Seite des Bauteils liegen, wo der Energiebedarf am größten ist. Bei einem Tailored Blank mit einem Dickensprung sollte die negativ gepolte Elektrode deshalb auf der Seite des Dickensprungs liegen. Eine weitere Möglichkeit der Einflußnahme auf die Wärmezufuhr steckt in der Elektrodenform, von deren Durchmesser oder Spitze die Energiedichte abhängt.

Beim Einsatz von Wechselstrom bei auf beiden Seiten des Bauteils angeordneten Elektroden läßt sich der Wärmeeintrag auf beiden Seiten vergleichmäßigen. Eine gezielte Steuerung des Wärmeeintrags wird über eine Steuerung der Zeitdauer der positiven und negativen Phasen und deren Amplituden möglich.

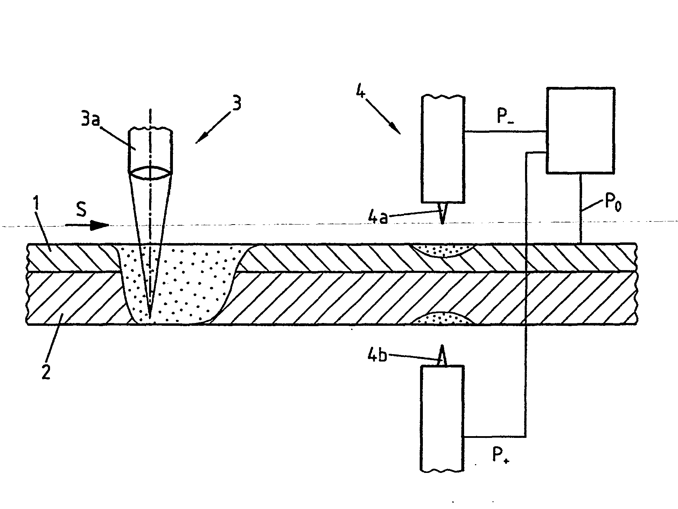

Im folgenden wird die Erfindung anhand einer ein Ausführungsbeispiel darstellenden Zeichnung näher erläutert. Die Zeichnung zeigt in schematischer Darstellung in Seitenansicht eine Einrichtung mit einem Laser zum Stumpfschweißen von Blechen insbesondere aus Aluminium und eine Einrichtung mit einem online angeordneten Lichtbogen zum Glätten der Schweißnaht.

Zwei im Stumpfstoß miteinander zu verschweißende Bleche 1,2 unterschiedlicher Dicke werden einer Schweißeinrichtung 3 mit einem Laser 3a zugeführt. Der Schweißeinrichtung 3 nachgeordnet ist eine Lichtbogeneinrichtung 4, deren auf negativem Spannungspotential P₋ liegende Elektrode 4a auf der Oberseite der Schweißnaht und des Dickensprungs liegt und deren auf positivem Spannungspotential P₊ liegende Elektrode 4b auf der Unterseite der Schweißnaht liegt, während das aus den Blechen 1, 2 bestehende Bauteil auf einem dazwischen liegenden Spannungspotential P₀ liegt.

Bei stationär angeordneter Schweißeinrichtung 3 und dazu im Abstand angeordneter Lichtbogeneinrichtung 4 wandern die miteinander im Stumpfstoß zu verschweißenden Bleche 1,2 in Richtung S unter die Schweißeinrichtung 3 und dann zur Lichtbogeneinrichtung 4. Dabei wird im Stumpfstoß der beiden Bleche 1,2 von der Seite des Dickensprungs aus Material aufgeschmolzen. In der Zeichnung ist die Schmelze punktiert dargestellt. Das Material in der Schweißnaht erstarrt, bevor es den Lichtbogen der Einrichtung 4 erreicht. Hier wird es oberflächlich wieder aufgeschmolzen. Die wieder aufgeschmolzenen Bereiche sind ebenfalls punktiert gekennzeichnet. Durch dieses Aufschmelzen und erneute Erstarren wird eine Glättung der Schweißraupe bewirkt.

Abweichend vom Ausführungsbeispiel kann die Schmelze der Schweißnaht aber auch noch flüssig sein. In diesem Fall wird durch die Zufuhr weiterer Wärmeenergie die Schmelze flüssiger, wodurch ebenfalls eine Glättung der Schweißnaht an deren Oberfläche erreicht wird.

## Patentansprüche

1. Verfahren zur Schweißnahtglättung beim Strahlschweißen bei welchem eine Schweißnaht zwischen zwei Metallbauteilen zumindest mit Hilfe eines Schweißstrahls im Tiefschweißmodus hergestellt wird, der Schweißnaht an einem zur Prozesszone räumlich versetzten Ort weitere Wärme mittels eines Lichtbogens zugeführt wird, und die Schweißnaht an diesem Ort durch erneutes Aufschmelzen zumindest an der Oberfläche oder Erhöhung des Flüssigkeitsgrades einer bestehenden Schmelze geglättet wird.
**dadurch gekennzeichnet, dass** die für das erneute Aufschmelzen und/oder die weitere Verflüssigung der Schmelze benötigte Wärme zumindest teilweise von der Unterseite der Schweißnaht zugeführt wird.

2. Verfahren nach Anspruch 1,
**dadurch gekennzeichnet, dass** bei einem Lichtbogen die beiden Elektroden auf der Ober- und Unterseite der Schweißnaht angeordnet ist, wobei das Bauteil auf einem Spannungspotential zwischen den Spannungspotentialen der Elektroden liegt.

3. Verfahren nach Anspruch 2,
**dadurch gekennzeichnet, dass** die auf negativem Potential liegende Elektrode auf der einen größeren Energiebedarf aufweisenden Seite der Schweißnaht liegt.

4. Verfahren nach Anspruch 3,
**dadurch gekennzeichnet, dass** die Stromquelle für den Lichtbogen mit Wechselstrom betrieben wird.

5. Verfahren nach Anspruch 4,
**dadurch gekennzeichnet, dass** die positiven und negativen Phasen des Wechselstroms in der Zeitdauer und/oder in der Amplitude einstellbar sind.

## Claims

1. Method for smoothing a weld joint during beam welding, by which a weld joint between two metal components is created at least with the help of a welding beam in deep welding mode, wherein additional heat is applied by means of an arc to a place which is spatially shifted from the process zone, and the weld joint at this place is smoothed by means of renewed melting at least at the surface or by means of increasing the viscosity grade of an existing flux,
**characterised in that**
the heat required for renewed melting and/or further liquidation of the flux is at least partially supplied from the underside of the weld joint.

2. Method according to claim 1,
**characterised in that** two electrodes for the arc are arranged at the upper and under sides of the weld joint, wherein the component lies at a voltage potential between the voltage potentials of the electrodes.

3. Method according to claim 2,
**characterised in that** the electrode, which has a negative potential, lies at the side of the weld joint which requires the greater energy.

4. Method according to claim 3,
**characterised in that** the current source for the arc is operated by alternating current.

5. Method according to claim 4,
**characterised in that** the positive and negative phases of the alternating current can be adjusted with respect to duration and/or amplitude.

## Revendications

1. Procédé pour lisser un soudage moyennant le soudage par faisceaux, à partir duquel est fabriqué un joint de soudage entre deux éléments métalliques à l'aide, d'au moins, un soudage par faisceau en mode de chaleur profonde, le joint de soudage est conduit à un endroit de déplacement spatial de la zone du procédé ayant la chaleur la plus élevée moyennant un arc électrique, et le joint de soudage est lissé dans cet endroit à l'aide d'une nouvelle fusion superficielle, au moins sur la surface ou à partir de l'élévation de la viscosité d'une masse fondue existante, **caractérisé en ce que** pour la nouvelle fusion superficielle et/ ou pour la fusion suivante de la masse fondue, la chaleur nécessaire est conduite, au moins de façon partielle, de la partie inférieure du joint de soudage.

2. Procédé selon la revendication 1, **caractérisé en ce que** les deux électrodes sont disposées sur la partie supérieure et inférieure du joint de soudage moyennant un arc électrique, dans lequel le composant a un potentiel électrique situé entre les potentiels électriques des électrodes.

3. Procédé selon la revendication 2, **caractérisé en ce que** l'électrode située dans le potentiel négatif se trouve sur la partie qui montre une demande d'énergie plus importante du joint de soudage.

4. Procédé selon la revendication 3, **caractérisé en ce que** la source d'énergie pour l'arc électrique fonctionne avec un courant alterne.

5. Procédé selon la revendication 4, **caractérisé en ce que** les phases positives et négatives du courant alterne peuvent être réglées dans leur durée et/ ou dans leur amplitude.
